Europäisches Patentamt

European Patent Office

Office européen des brevets

(11) Numéro de publication : **0 008 976**
**B1**

# FASCICULE DE BREVET EUROPÉEN

(45) Date de publication du fascicule du brevet :
09.06.82

(51) Int. Cl.³ : **H 04 L 27/10**

(21) Numéro de dépôt : 79400581.9

(22) Date de dépôt : 21.08.79

(54) **Modulateur numérique à modulation à déplacement de fréquence.**

(30) Priorité : 23.08.78 FR 7824852

(43) Date de publication de la demande :
19.03.80 (Bulletin 80/06)

(45) Mention de la délivrance du brevet :
09.06.82 Bulletin 82/23

(84) Etats contractants désignés :
DE GB NL

(56) Documents cités :
US A 3 890 581
ELEKTROTECHN. & MASCHINEBAU, vol. 25, no.
2, février 1978, Vienne (AU) W. KAISER : « Stand
und Entwicklungstendenzen bei Modems für die
schnelle Übertragung von Daten in Fermsprechkanal », pages 67-78.

(73) Titulaire : Etablissement Public de Diffusion dit
"Télédiffusion de France"
21-27 rue Barbès
F-92120 Montrouge (FR)

Renoulin, Roger Jean
29, Rue René Jean Mailleux
Thorigné-sur-Vilaine F-35510 Cesson (FR)

(72) Inventeur : Renoulin, Roger Jean
29, Rue René Jean Mailleux Thorigné-sur-Vilaine
F-35510 Cesson (FR).

(74) Mandataire : Le Guen, Louis François
13, rue Emile Bara BP 91
F-35802 Dinard Cedex (FR)

Imprimerie Jouve, 18, rue St-Denis, 75001 Paris, France

Modulateur numérique à modulation à déplacement de fréquence

La présente invention concerne un modulateur-démodulateur prévu pour transmettre et recevoir des informations numériques sur une ligne « à deux fils » et pour être utilisé avec un équipement terminal de téléinformatique.

Dans le domaine de la téléinformatique, selon les avis du CCITT, on distingue, dans un équipement terminal de téléinformatique, d'une part, l'équipement de terminaison de ligne ou ETL qui comprend le modem et les organes de démodulation des signaux vidéo, si la version de l'équipement est couplée à un récepteur de données diffusées par un canal de télévision, tel que par exemple le récepteur du système de diffusion décrit dans le brevet français n° 2 313 825 déposé aux noms conjoints de « Télédiffusion de France » et de « l'Etat Français », et, d'autre part, un équipement terminal de traitement de données ou ETTD qui comprend un appareil de visualisation, lequel peut comprendre un téléviseur. En fait, dans la suite, on ne s'intéressera qu'au modem entrant dans la composition de l'ETL sans traiter les questions de signalisation et d'exploitation.

Un objet de la présente invention consiste à prévoir un modem pour modulation à déplacement de fréquence à bande minimale du type de ce qu'il est convenu d'appeler dans la littérature anglo-saxonne une modulation MSK ou « minimum shift keying », qui présente l'avantage de résister aux non-linéarités des systèmes de transmissions.

Par ailleurs, on connaît des modulateurs, prévus pour modems, utilisant des formes d'ondes échantillonnées dont les échantillons sont préenregistrés dans des mémoires. Dans le cas d'une modulation simple à déplacement de fréquence, on pré-enregistre les formes d'onde de deux sinusoïdes ou portions de sinusoïdes correspondant aux fréquences de modulation, chaque forme d'onde étant associée à la valeur d'un élément binaire, puis, en fonction des éléments binaires à transmettre, on sélecte la forme d'onde dont les échantillons sont lus, puis transmis après filtrage basse-fréquence. Un autre exemple d'un tel modulateur est décrit dans le brevet américain 3 772 681, dans lequel, d'une sinusoïde à l'autre, le nombre d'échantillons à lire change. Dans l'article intitulé « Stored Waveform Technique for DPSK Modem » paru dans la revue américaine IBM Technical Disclosure Bulletin, Vol. 17, N° 12, mai 1975, pages 3 643 et 3 644, les formes d'ondes mises en mémoire correspondent à des blocs différents de plusieurs éléments binaires et sont sélectées selon les séquences d'éléments binaires à transmettre. Toutefois, aucun des modulateurs décrits dans ces publications ne permet directement d'obtenir une modulation MSK. A titre indicatif, en ce qui concerne la génération d'ondes à partir de formes d'ondes complètes ou partielles, on peut également consulter l'article de la revue américaine « IEEE Transactions on Instrumentation and Measurement », Vol. IM-12, N° 2, septembre 1963, pages 86 à 90, intitulé « A 12-MC, Nine-Bit Digital Function Generator », et l'article de la revue américaine Hewlett-Packard Journal, Vol. 25, août 1974, N° 12, et intitulé « Peak-to-Average Ratio Measurements ».

Un objet de l'invention consiste à prévoir un modulateur pour modulation MSK dans lequel on utilise la technique des formes d'onde échantillonnées à échantillons préenregistrés.

Selon l'invention, pour un tel modem, dans lequel le modulateur comprend une mémoire contenant une table de sinus composée d'échantillons numériques correspondant à des valeurs angulaires croissant régulièrement de 0° à 180°, les entrées d'adressage de lecture de la mémoire étant reliées à la sortie de compte d'un compteur cyclique de capacité égale au nombre d'échantillons et la sortie de la mémoire étant reliée à l'entrée d'un convertisseur numérique-analogique dont la sortie est reliée à un circuit de commutation alternative de signe dont la sortie est reliée à l'entrée d'un filtre de lissage délivrant les signaux de sortie du démodulateur, il est prévu de relier l'entrée d'avancement dudit compteur à la sortie d'un diviseur à deux rapports de division dont l'entrée de signal est reliée à la sortie d'un générateur d'impulsions à fréquence fixe mais ajustable et dont l'entrée de commande de rapport de division est reliée à l'entrée des données binaires un « 1 » binaire commandant un rapport de division et un « 0 » binaire commandant l'autre rapport de division, la sortie de débordement dudit compteur étant reliée à l'entrée de commande du circuit de commutation alternative de signe.

Les caractéristiques de la présente invention mentionnées ci-dessus, ainsi que d'autres, apparaîtront plus clairement à la lecture de la description suivante d'un exemple de réalisation, ladite description étant faite en relation avec les dessins joints, parmi lesquels :

la Figure 1 est un schéma bloc d'un ETL comprenant un modulateur-démodulateur ou modem, suivant l'invention, et

la Figure 2 est un schéma du modulateur de l'équipement de la Fig. 1.

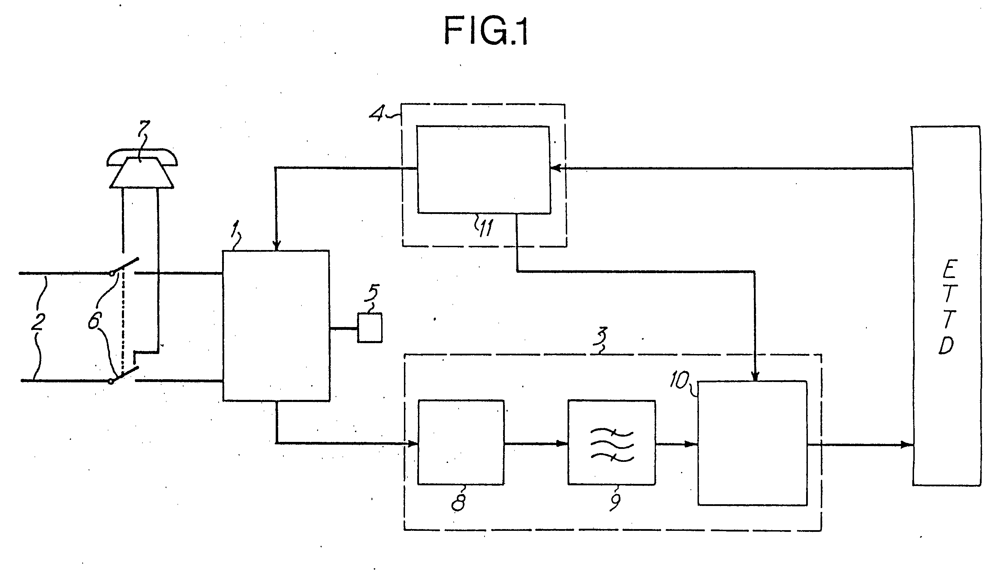

Dans l'équipement ETL de la Fig. 1, sont prévus un duplexeur 1, fonctionnant comme un transformateur différentiel classique, entre une ligne 2, un circuit de réception 3, un circuit d'émission 4 et un équilibreur 5. Sur la ligne 2, est prévu un commutateur 6 permettant de relier la ligne 2 soit au duplexeur 1, soit à un poste téléphonique d'abonné 7. Le circuit de réception 3 comprend un circuit égaliseur de temps de groupe 8 dont l'entrée est reliée à la sortie du duplexeur 1, un filtre passe-bande 9 est relié à la sortie du circuit 8, et un démodulateur 10 dont l'entrée est reliée à la sortie du filtre 9 et dont la sortie est reliée à l'entrée d'un ETTD. Le circuit d'émission 4 est essentiellement formé d'un modulateur 11 dont l'entrée est reliée à la sortie de l'ETTD et dont la sortie est reliée à l'entrée du duplexeur 1. L'ETTD comprend, par exemple, un concentrateur diffuseur de données de télétexte ou de téléécriture, et un appareil de réception, tel qu'un téléviseur.

Bien entendu, comme on suppose la liaison bilatérale et simultanée, il faut prévoir des bandes de fréquences différentes allouées pour chaque sens. Ainsi, à une extrémité, on peut avoir un modulateur 11 fonctionnant à 1 200 bauds et un démodulateur fonctionnant à 75 bauds avec un filtre 9 dont la bande passante va de 390 à 450 Hz, et, à l'autre extrémité, un modulateur 11 fonctionnant à 75 bauds et un démodulateur fonctionnant à 1 200 bauds avec un filtre 9 dont la bande passante va de 1 300 à 2 100 Hz. Ci-après, on va décrire un modulateur 11 avec des valeurs numériques correspondant à une modulation à 75 bauds.

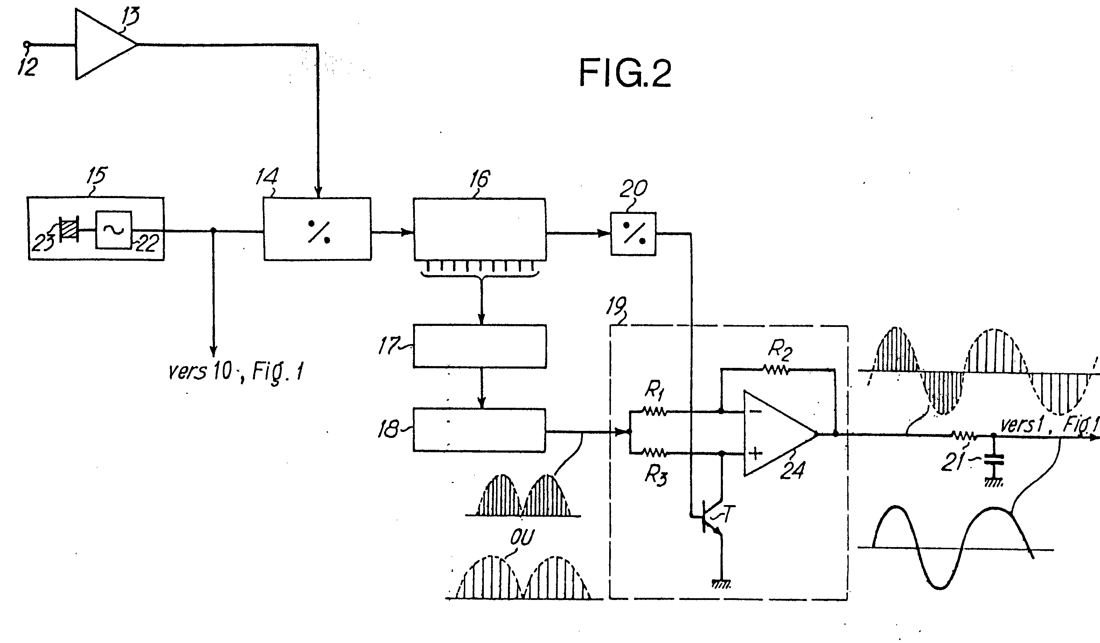

Le modulateur 11 de la Fig. 2 a son entrée 12, par laquelle sont transmis les signaux provenant de l'ETTD, reliée à l'entrée d'un amplificateur régénérateur classique 13, dont la fonction est de délivrer des signaux dont les niveaux sont compatibles avec les circuits numériques qui suivent. La sortie de l'amplificateur 13 est reliée à l'entrée de commande d'un diviseur numérique 14 dont l'entrée de signal est reliée à la sortie d'un générateur d'impulsions périodiques 15 de fréquence f. Le diviseur 14 a un rapport de division qui peut prendre deux valeurs correspondant respectivement aux valeurs binaires délivrées par l'amplificateur 13. La sortie du diviseur 14 est reliée à l'entrée d'un compteur cyclique 16. Le compteur 16 a ses sorties parallèles reliées aux entrées d'adressage d'une mémoire 17 dont le contenu est fixé et dont la sortie de données est reliée à l'entrée d'un convertisseur numérique-analogique 18.

La sortie d'échantillons du convertisseur 18 est reliée à l'entrée d'un circuit de commutation 19 capable d'inverser ou non le signe de l'échantillon analogique qui lui est appliqué, selon la valeur de l'élément binaire appliqué à son entrée de commande à partir d'un diviseur par deux 20 dont l'entrée est reliée à la sortie de débordement du compteur 16. La sortie du circuit de commutation 19 est reliée à l'entrée du duplexeur 1 et constitue la sortie du modulateur 11.

Le générateur d'impulsions 15 est constitué par un oscillateur 22 stabilisé par un quartz 23 et délivrant un signal à 256 Hz appliqué à 14. Selon que l'élément binaire ou eb appliqué par 13 à 14 est un *1* ou *0* (ou vice versa), le rapport de division de 14 est égal à *13* ou à *15*, si bien que le signal appliqué au compteur 16 a une fréquence de 19,69 kHz ou de 17,06 kHz. Le compteur 16 compte cycliquement jusqu'à *22*, valeur à laquelle il est remis à zéro en même temps qu'un signal est envoyé par sa sortie de débordement au diviseur par deux 20. Ce compte maximal de 22 pour le compteur 16 est défini par le nombre de valeurs différentes emmagazinées dans la mémoire 17. Des chiffres ci-dessus, il apparaît que la sortie de débordement de 16 a une fréquence de 0,895 kHz ou 0,775 kHz et que la sortie du diviseur 20 a une fréquence de 447,5 kHz ou 387,5 kHz, soit approximativement 450 ou 90 Hz.

Dans la mémoire 17 est enregistrée une table numérique de sinus dont le pas est voisin de 8,18°. Ainsi, à l'adresse 1, la mémoire contient la valeur numérique de sin 8,18° ; à l'adresse 2, la valeur numérique de sin 16,36° ; à l'adresse k, la valeur numérique de sin $(k \times 8,18°)$ ; à l'adresse 22, la valeur de sin 180° = 0.

Donc, à chaque pas du compteur 16, de la sortie de données de la mémoire 17 délivre une valeur numérique qui est convertie en échantillon analogique dans le convertisseur 18. Le convertisseur 18 est constitué par un circuit existant sur le marché.

Le circuit de commutation 19 comprend un amplificateur opérationnel différentiel 24 dont les deux entrées − et + sont respectivement reliées en parallèle à la sortie du convertisseur 18 par l'intermédiaire de résistances R1 et R3. La sortie de l'amplificateur 24 est reliée à son entrée − par une résistance de contre-réaction R2. L'entrée + de 24 est reliée à la masse par le circuit collecteur-émetteur d'un transistor T dont la base est reliée à la sortie du diviseur 20. Si l'on appelle R4 la résistance du circuit collecteur-émetteur de T, la tension de sortie de l'amplificateur 24 est donnée par la relation :

$$V_s = -\frac{R2}{R1} V_{e^-} + \frac{1 + \dfrac{R2}{R1}}{1 + \dfrac{R4}{R3}} V_{e^+} \qquad (1)$$

où $V_s$ est la tension de sortie, $V_{e^-}$ la tension à l'entrée − et $V_{e^+}$ la tension à l'entrée + de 24. On suppose, de plus, que R2 = R1 et que, selon l'eb appliqué à la base du transistor T, celui-ci fonctionne en mode bloqué ou saturé, de sorte que R4 peut prendre une valeur considérable correspondant au blocage du transistor ou une valeur quasi nulle correspondant à la saturation.

Ainsi, dans le cas du transistor T bloqué, on a d'après (1) :

$V_s = -V_{e^-} + 0$ en supposant R4 infinie,
ou, dans le cas du transistor saturé, on a :
$V_s = -V_{e^-} + 2 V_{e^+}$ en supposant R4 = 0, ou encore,
$V_s = V_{e^+} = V_{e^-}$ puisque les entrées sont alimentées en parallèle par 18.

Ainsi, le circuit 19 permet bien tous les 180° d'inverser les échantillons de sinusoïde appliqués au filtre intégrateur 21, ce qui permet d'obtenir à la sortie de celui-ci des sinusoïdes complètes. A noter que le filtre 21 peut être très sommaire, c'est-à-dire constitué, comme représenté, par une résistance en série et un condensateur en parallèle.

Il faut bien comprendre que le passage d'une fréquence de modulation à une autre est concrétisé par un intervalle de temps entre les deux échantillons délivrés par 18 passant d'une valeur à une autre. On pourra alors constater qu'à la sortie du filtre 21 le passage d'une sinusoïde à une autre se fait sans discontinuité. Il s'agit donc bien d'une modulation du type MSK. Les fréquences de modulation sont évidemment celles de la sortie du diviseur 20, soit 450 ou 390 Hz.

Comme on l'a mentionné au début de la description de l'exemple de réalisation du modulateur 11, les valeurs numériques indiquées correspondaient à une modulation à 75 bauds. Dans le cas d'une modulation à 1 200 bauds, dans le générateur 15, le quartz 23 garde la même fréquence et l'oscillateur 22 est réglé pour délivrer au diviseur 14 un signal à 819 kHz. Selon que l'eb appliqué par 13 à 14 est un *1* ou un *0*, le rapport de division de 14 est égal à *13* ou à *21*, si bien que le signal appliqué au compteur 16 a une fréquence de 63 kHz ou de 39 kHz. Le compteur 16 compte cycliquement jusqu'à 15. Donc, à la sortie de débordement de 16 on a une fréquence de 4 200 Hz ou 2 600 Hz et à la sortie de 20 une fréquence de 2 100 Hz ou de 1 300 Hz. A noter encore que dans ce cas, la table numérique de sinus enregistrée dans la mémoire 17 a un pas de 12°, au lieu de 8,18°.

Il doit être bien compris que le passage d'un fonctionnement de 75 bauds à un fonctionnement de 1 200 bauds peut être effectué sans changer la structure du modulateur ou du démodulateur, mais seulement en changeant des rapports de division de diviseurs et le nombre des étages de compteurs, ainsi que les tables de mémoires, opérations qui font partie de l'état de la technique. Bien entendu, la sortie du générateur 15 du modulateur 11 est, de préférence, reliée au démodulateur 10 pour obtenir une bonne synchronisation.

A la Fig. 2, on a représenté, en relation avec certaines entrées ou sorties de circuit, des formes de signaux qui illustrent le fonctionnement du modulateur 11.

En pratique, avec un tel modulateur suivant l'invention, la qualité de la modulation est telle que le premier harmonique est à un niveau de − 60 dB au-dessous de celui du fondamental, ce qui permet de se passer du filtre de bande que l'on prévoit à la sortie des modulateurs connus. Il en résulte un prix de revient moins élevé pour le modem.

En pratique également, si l'on suppose que le signal à transmettre est une série alternée de *0* et de *1*, on peut se rendre compte que le raccord entre les sinusoïdes envoyées en ligne n'est pas sur l'axe des abscisses, mais décalé. Toutefois, on pourrait montrer que la modulation obtenue est tout de même une modulation de type MSK.

#### Revendication

1. Modulateur pour modulation de fréquence à déplacement de fréquence à bande minimale ou modulation MSK, comportant une mémoire (17) contenant une table de sinus composée d'échantillons numériques correspondant à des valeurs angulaires croissant régulièrement de 0° à 180°, les entrées d'adressage de lecture de la mémoire étant reliées à la sortie de compte d'un compteur (16) cyclique de capacité égale au nombre d'échantillons et la sortie de la mémoire (17) étant reliée à l'entrée d'un convertisseur (18) numérique-analogique dont la sortie est reliée à un circuit (19) de commutation alternative de signe dont la sortie est reliée à l'entrée d'un filtre (21) de lissage délivrant les signaux de sortie du modulateur, caractérisé en ce que l'entrée d'avancement dudit compteur (16) est reliée à la sortie d'un diviseur (14) à deux rapports de division dont l'entrée de signal est reliée à la sortie d'un générateur (15) d'impulsions à fréquence fixe mais ajustable et dont l'entrée de commande de rapport de division est reliée à l'entrée (12) des données binaires, un « 1 » binaire commandant un rapport de division et un « 0 » binaire commandant l'autre rapport de division, la sortie de débordement dudit compteur (16) étant reliée à l'entrée de commande du circuit (19) de commutation alternative de signe.

#### Claim

1. A frequency shift keying modulator with minimum frequency band or MSK modulation, including a memory (17) storing a sine table made of digital samples corresponding to angular values regularly spaced from 0° up to 180°, the memory read-out address inputs being connected from the signal output of a cyclic counter (16) having a capacity equal to the number of the digital samples and the memory (17) output being connected to a digital-to-analogue converter (18), the output of which is connected to an alternate sign switching circuit (19), the output of which is connected to the input of a smoothing filter (21) delivering the modulator output signals, characterized in that the comp input of the said counter (16) is connected to the output of a two-division-ratio divider, the signal input of which is connected from the output of a pulse generator having a fixed, but settable frequency and the division-ratio control input of which is connected to the modulator binary data input (12), a bit « 1 » controlling one division ratio and a bit « 0 » the other division ratio, the carry output of the said counter (16) being connected to the control input of the alternate sign switching circuit (19).

#### Anspruch

1. Digitaler Frequenzverschiebungsmodulator mit minimalem Frequenzband oder MSK-Modulation, der einen Speicher (17) aufweist, der eine Sinustabelle, bestehend aus digitalen Schritten, enthält, die den gleichmäßig von 0 bis 180° ansteigenden Winkelwerten entsprechen, wobei die Ausleseadresseingänge des Speichers mit dem Zählausgang eines zyklischen Zählers (16) verbunden sind, der eine Kapazität hat, die gleich der Schrittanzahl ist, und wobei der Ausgang des Speichers (17) mit dem Eingang eines Digital/Analog-Wandlers (18) verbunden ist, dessen Ausgang mit einer Vorzeichen-Wechselschaltung (19) verbunden ist, deren Ausgang mit dem Eingang eines Glättungsfilters (21) verbunden ist, der Modulatorausgangssignale liefert, dadurch gekennzeichnet, daß der Treibereingang des Zählers (16) mit dem Ausgang eines Dividierers (14) mit zwei Divisionsverhältnissen verbunden ist, dessen Signaleingang mit dem Ausgang eines Impulsgenerators (25) mit fester, aber einstellbarer Frequenz und dessen Steuereingang für das Divisionsverhältnis mit dem Binärdaten-Eingang (12) verbunden ist, wobei eine binäre « 1 » ein Divisionsverhältnis und eine binäre « 0 » das andere Divisionsverhältnis steuert, und daß der Übertragungsausgang des Zählers (16) mit dem Steuereingang der Vorzeichen-Wechselschaltung (19) verbunden ist.

# FIG.1

ETTD

0 008 976

# FIG.2

vers 10 , Fig. 1

vers 1 , Fig 1

ou

R₁ R₂ R₃ T